# EUROPEAN PATENT SPECIFICATION

(11) **EP 2 810 561 B1**
(45) Date of publication and mention of the grant of the patent: **07.12.2016**
(21) Application number: 14171212.5
(22) Date of filing: 04.06.2014
(51) Int. Cl.: A21B 1/42, A21B 5/03, A21C 5/00

(54) **An assembly and method for the production of pancake**
Anordnung und Verfahren zur Herstellung eines Pfannkuchens
Système et méthode pour faire des crêpes

(30) Priority: 05.06.2013 NL 2010920
(43) Date of publication of application: 10.12.2014
(73) Proprietor: J. Vink jr. Development B.V., 3361 GN Sliedrecht (NL)
(72) Inventor: VINK, Jan, 3356 LR PAPENDRECHT (NL)
(74) Representative: Peters, Sebastian Martinus

(56) References cited:
- EP-A1- 2 364 593
- US-B1- 6 280 785

## Description

### BACKGROUND OF THE INVENTION

The invention relates to an assembly, and method for making pancakes.

Dutch patent 2004393 describes a method and assembly for making pancakes. The method uses a conveyor having a heatable carrier, on which the pancakes to be made are conveyed, and a first food jet printer. The method comprises the steps of applying a layer of cooking oil (or comparable shortening) on the carrier, and the first food jet printer applying a quantity of pancake batter on the layer of cooking oil applied on the carrier, wherein the carrier is moved relative to the food jet printer by the conveyor and wherein the food jet printer dispenses drops of pancake batter per position onto the carrier.

Due to the viscosity of the pancake batter the drops are discharged by the food jet printer at relatively high pressure. This may have the adverse effect of drops of pancake batter pushing away the cooking oil on the carrier, as a result of which there will be less or no cooking oil in between the pancake batter applied and the carrier. It may also result in the cooking oil spattering, possibly onto pancake batter that has already been applied. This may adversely affect the taste and look of the pancake to be made.

It is an object of the invention to provide an assembly, discharge device and method for the productions of pancakes, wherein at least one of the above-mentioned drawbacks is removed or reduced.

### SUMMARY OF THE INVENTION

According to a first aspect of the invention the above-mentioned object is achieved by an assembly for the production of pancakes, comprising:
- a conveyor having a heatable carrier on which the pancakes to be made are conveyed in a conveyance direction;
- a first discharge device placed over the conveyor, wherein the first discharge device is provided with several nozzles for each time discharging a preset quantity of pancake batter for the nozzle in question onto the carrier; and
- a control device for individually controlling substantially each nozzle of the discharge device for the discharge or not of a preset quantity of pancake batter for the nozzle in question,
   wherein the control device is adapted for controlling the discharge device such that the preset quantity of pancake batter for the nozzle in question forms a line on the carrier in the conveyance direction and that several lines, each coming from a different nozzle, together form at least a part of the pancake to be made.

Instead of discharging drops of pancake batter, according to the invention each time such a quantity of pancake batter is each time discharged per nozzle, that a line is formed on the carrier, or in particular on the cooking oil that has been applied on the carrier. A jet of pancake batter is generated that comes down onto the carrier and in particular onto the cooking oil. This ensures less spattering and/or pushing away of the cooking oil than a series of individually discharged drops coming down onto the carrier, and the cooking oil in particular, would.

The control device preferably is adapted for controlling and/or setting the point in time and the duration of discharging pancake batter through each of the apertures.

In addition the control device preferably is adapted for defining, controlling and/or setting the conveyance speed of the conveyor.

By varying the length and/or the location of the line of pancake batter, pancakes of different shapes can be made.

The carrier preferably is provided with carrier plates, wherein each carrier plate is adapted for accommodating one or several of the pancakes to be made.

The control device preferably is adapted for controlling the discharge device and the conveyor such that the pancake batter for one single pancake is discharged onto one single carrier plate.

In one embodiment of the assembly according to the invention, the several nozzles are connected to a reservoir for the pancake batter. In a further embodiment the reservoir is at least partially situated over the conveyor.

In one embodiment of the assembly according to the invention, the reservoir for the pancake batter is pressurised and the several nozzles preferably are adapted for discharging the preset quantity of pancake batter for the nozzle in question by temporarily opening the nozzle in question.

In this embodiment the pressure in the reservoir ensures that the preset quantity of pancake batter for the nozzle in question is pushed out of the nozzle when the nozzle is temporarily opened.

The pressure in the reservoir may refer to the pressure of the pancake batter in the reservoir.

In one embodiment of the assembly according to the invention, the several nozzles have been formed in a wall of the reservoir for the pancake batter.

In one embodiment of the assembly according to the invention, the several nozzles each comprise at least one aperture, such as a hole or slot, for discharging pancake batter.

In one embodiment of the assembly according to the invention the apertures of the nozzles form a row of adjacently positioned apertures, wherein the row is placed on a substantially straight line. In one embodiment the angle between the straight line and a conveyance direction of the conveyor can be set. As a result the pitch of the apertures, at least its projection in the conveyance direction, can be set.

The first discharge device preferably is provided with an exchange plate facing the carrier, which plate is provided with the apertures of the nozzles. In that way it is possible to change the shape and/or diameter of the apertures of the first discharge device by means of changing from the one exchange plate having apertures of a first type to another exchange plate having apertures of a second type, and the discharge device can be optimised for processing a specific type of pancake batter.

In one embodiment of the assembly according to the invention the apertures of the nozzles are formed as substantially round holes. In one embodiment the centre-to-centre distance between two adjacent holes, is approximately four times as large as the diameter of the holes.

It has turned out that the dimensions of the discharge device for discharging pancake batter, particularly onto a hot carrier, is an important factor in achieving the desired result.

On the one hand the lines of pancake batter on the carrier should not be too small, as otherwise the lines would not merge into each other and the pancake would consist of an assembly of lines. On the other hand the lines should not be too thick, as otherwise there is too little resolution for decorative parts on the pancake. Favourable results have been obtained using a discharge device, wherein the holes have a diameter in the range of 1-3 mm, for instance substantially 1 mm or substantially 2 mm and wherein the centre-to-centre distance of two adjacent holes is substantially 4 mm.

In a further embodiment the first discharge device comprises a closing member for each nozzle for closing off the at least one aperture.

The closing member may comprise a cylinder and/or a piston. The piston can be movable in the cylinder. The piston may be provided with an outer end that fits at least partially in the aperture. In case the aperture is a round hole, the outer end preferably is conical.

If the outer end has been moved into the hole, the nozzle in question is closed off. When the outer end has been moved out of the hole, the nozzle in question is open. The nozzle in question can therefore be opened and closed by moving the piston.

In one embodiment of the assembly the closing members of the nozzles form a closing device. In a further embodiment the reservoir and the closing device can be separated from each other. In that case the reservoir can be filled and/or cleaned without the risk of damaging the closing device, in particular the closing members.

In one embodiment of the assembly according to the invention, the assembly further comprises a pressure regulator for keeping the pressure in the reservoir substantially constant during discharging pancake batter and/or for reducing pressure variations in the reservoir.

If the several nozzles have been connected to the pressurised reservoir, pressure variations may occur if the number of open nozzles varies. The pressure in the reservoir may for instance be (temporarily) lower when all nozzles are open, than would be the case when all nozzles are closed.

Said pressure variations may result in different ways in which the pancake batter is applied on the carrier and in differences in the extent to which the cooking oil spatters or is pushed away by the pancake batter. Therefore it is advantageous to keep the pressure in the reservoir (substantially) constant as much as possible, in order to reduce the pressure variations in the reservoir.

In one embodiment of the assembly according to the invention, the pressure regulator comprises an expansion vessel, connected to the reservoir. Preferably the expansion vessel is adapted for reducing the pressure variations in the reservoir.

In one embodiment of the assembly according to the invention, the several nozzles comprise a first and a second nozzle and the pressure regulator is adapted for keeping the pressure in the reservoir substantially constant (and/or for reducing the pressure variations in the reservoir), not depending on whether the first nozzle is open and/or the second nozzle is open.

Generally it is possible to discharge the pancake batter on a "cold" carrier (particularly having a temperature below baking temperature), after which the carrier with the pancake batter discharged thereon is heated to a set baking temperature for baking the pancakes.

On the other hand it is also possible to discharge the pancake batter on a heated carrier (particularly having a temperature substantially equalling the baking temperature). By directly discharging pancake batter onto a hot carrier, the liquidity of the pancake batter discharged will quickly be reduced due to baking. As a result the pancake batter discharged is fixated substantially on the position of discharge. As a result the shape or contour of the pancake can also be set more accurately.

In that way pancakes of various shapes can be made, such as round, square, heart-shaped, star-shaped or pine tree-shaped pancakes.

In one embodiment of the assembly the preset quantity of pancake batter for the nozzle in question and the conveyance speed of the conveyor have been set such that the preset quantity of pancake batter for the nozzle in question has a dot shape or disk shape on the carrier.

By disposing said dot-shaped or disk-shaped quantities of pancake batter at the edges of the pancakes to be made, it has turned out to be possible to make the edges of the pancakes thinner than the rest, so that the pancake to be made, at least as regards looks and/or texture, can be compared with traditionally prepared pancakes.

In one embodiment of the assembly according to the invention the assembly further comprises a second discharge device for discharging a cooking oil, or another shortening, onto the carrier, wherein the second discharge device preferably is placed upstream from the first discharge device in the conveyance direction.

The cooking oil can then be dosed such that oil is only applied on those locations on the carrier where later on the pancake batter and/or the filling will be applied by a discharge device. In that way the quantity of oil required for the production of pancakes can be considerably reduced.

In one embodiment of the assembly according to the invention, the assembly further comprises a third discharge device for discharging a filling, preferably onto the carrier or onto the pancake batter discharged by the first discharge device. Examples of filling are jam, syrup and cheese.

In one embodiment of the assembly according to the invention, the assembly further comprises a fourth discharge device for discharging a second quantity of pancake batter onto the carrier.

The pancake batter in the first discharge device preferably is a batter that is different from the pancake batter in the fourth discharge device. By using two different batters, which for instance have different colours, pancakes can be made in which visible figures have been made.

The characteristics of the first discharge device as described in this document can also be applied to the second, third and/or fourth discharge device, *mutatis mutandis.*

In one embodiment of the assembly according to the invention, the assembly further comprises heating elements or burners for heating the carrier to substantially a set baking temperature, at least before the carrier reaches the first discharge device.

As described above the pressure variations in the reservoir may result in differences in the extent to which the cooking oil spatters or is pushed away by the pancake batter and in different ways in which the pancake batter is applied on the carrier. It will therefore be advantageous to keep the pressure in the reservoir substantially constant as much as possible in order to reduce pressure variations in the reservoir.

In one embodiment according to the invention, the pressure regulator comprises an expansion vessel connected to the reservoir. According to a second aspect of the invention the objective is achieved by a method for the production of pancakes, in which method use is made of a conveyor having a heatable carrier on which the pancakes to be made are conveyed and a first discharge device placed over the conveyor, wherein the first discharge device is provided with several nozzles for each time discharging a preset quantity of pancake batter for the nozzle in question onto the carrier, wherein the method comprises the steps of:
- discharging a quantity of pancake batter onto a layer of cooking oil applied on the carrier by the first discharge device, wherein the carrier is moved relative to the discharge device in a conveyance direction by the conveyor, wherein each of the several nozzles each time discharges the preset quantity of pancake batter for the nozzle in question, wherein the preset quantity of pancake batter for the nozzle in question is set such that the preset quantity of pancake batter for the nozzle in question forms a line on the carrier in the conveyance direction, and wherein several lines, each coming from a different nozzle, together form at least a part of a pancake to be made.

In one embodiment of the method according to the invention the method also comprises the step of applying a layer of cooking oil (or a comparable shortening) on the carrier prior to the step of discharging a quantity of pancake batter onto the layer of cooking oil applied on the carrier by the first discharge device.

In one embodiment of the method according to the invention, substantially each nozzle of the discharge device is individually controlled for the discharge or not of the preset quantity of pancake batter for the nozzle in question.

In one embodiment of the method according to the invention, the several nozzles have been connected to a reservoir for the pancake batter.

In one embodiment of the method according to the invention, the preset quantity of pancake batter for the nozzle in question is discharged by pressurising the reservoir with pancake batter and temporarily opening the nozzle in question.

In one embodiment of the method according to the invention, the several nozzles have been formed in a wall of the reservoir for the pancake batter.

In one embodiment of the method according to the invention, the method further comprises the step of keeping the pressure in the reservoir substantially constant during discharging pancake batter and/or the step of reducing pressure variations in the reservoir.

In one embodiment of the method according to the invention, an expansion vessel is used to keep the pressure in the reservoir substantially constant during discharging the pancake batter and/or reducing the pressure variations in the reservoir during discharging the pancake batter.

### SHORT DESCRIPTION OF THE DRAWINGS

The invention will be elucidated on the basis of a number of exemplary embodiments shown in the attached drawings, in which:
Figure 1 shows a schematic view in perspective of an embodiment of an assembly for baking pancakes;
Figure 2 shows a bottom view of a discharge device according to a first embodiment of the invention;
Figure 3 shows how a pancake can be formed by lines and/or drops of pancake batter discharged onto the carrier;
Figure 4 shows a schematic view in perspective of a second embodiment of an assembly for baking pancakes;
Figure 5 shows a schematic view in perspective of a third embodiment of an assembly for baking pancakes; and
Figure 6 shows a schematic view of a part of an embodiment of a discharge device according to the invention.

### DETAILED DESCRIPTION OF THE DRAWINGS

In the inventive method for making pancakes 1 use is made of a conveyor 10 that is generally known per se, which is provided with a carrier 11 that can possibly be heated up to a baking temperature, preferably of approximately 180 degrees Celsius. For that purpose a series of burners 14 can be arranged below the conveyor 10 for heating the carrier 11. Instead of burners 14 other known heating elements can also be used.

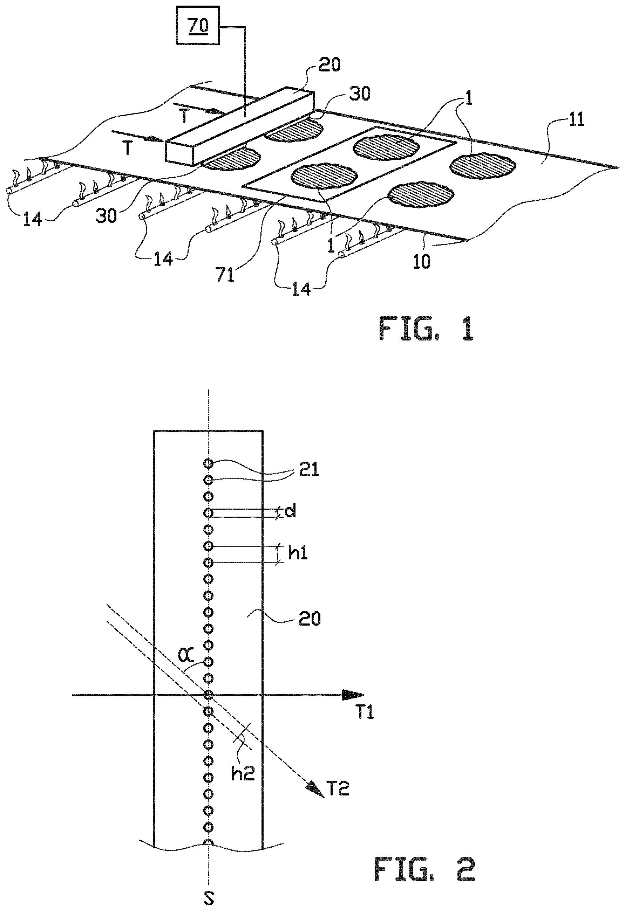

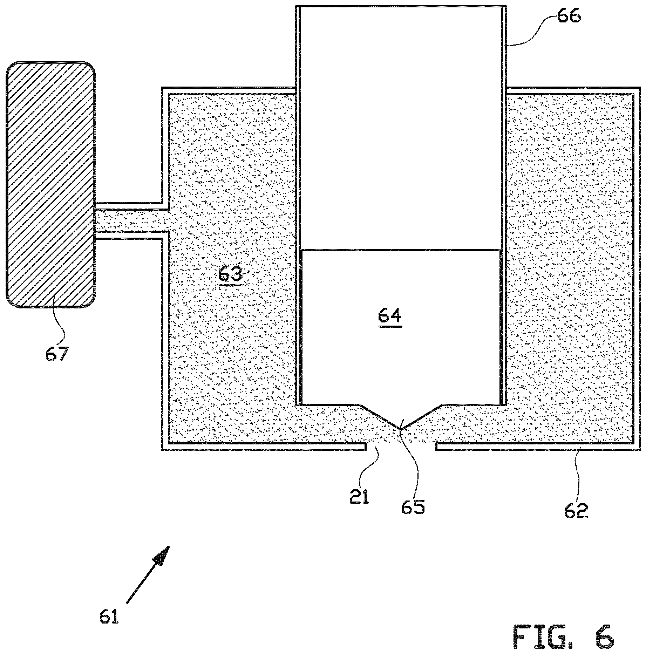

Over the carrier 11 a first discharge device 20 has been arranged which at the side facing the carrier 11 has been provided with a series S apertures 21 (see figure 2) for via the apertures 21 discharging pancake batter 30. Each of the apertures 21 is part of a nozzle 51 (see figure 6).

A control device 70 has been provided for controlling the first discharge device 20 and optionally for determining the conveyance speed and/or controlling of the conveyor 10.

The carrier has preferably been provided with carrier plates 71, wherein each carrier plate is suitable for receiving the pancake batter for one or several pancakes. A carrier plate preferably has a length that substantially equals a width of the carrier 11, for instance 2 metres. A carrier plate preferably has a width that substantially equals a diameter of a pancake to be made, for instance 25 cm.

In the exemplary embodiment shown, the apertures 21 have a diameter d of substantially 1 mm, and they are placed one behind the other in one line with a centre-to-centre distance h1 of substantially 4 mm.

The distance between the lines of pancake batter discharged onto the carrier 11 equals h1 for an arrangement wherein the series S extends substantially transverse to the conveyance direction T1 of the conveyor 10. As schematically shown in figure 2 the distance between the lines discharged onto the carrier 11 can be reduced by placing the series S at an acute angle to the conveyance direction of the conveyor 10. For instance when the angle between the series S and the conveyance direction T2 includes an angle α, the distance h2 projected in the conveyance direction T2 between the lines or drops of pancake batter equals: h2 = h1 sin α. Thus the pitch of the apertures 21 is adjustable by setting the angle α.

The first discharge device preferably is a so-called food jet printer.

Upstream from the first discharge device 20 the carrier can be provided with a layer of cooking oil, onto which the discharge device 20 discharges lines and/or drops of pancake batter 30 on the desired positions, which lines and/or drops together form a pancake 1.

The preset quantity of pancake batter for the nozzle in question preferably is set such that the preset quantity of pancake batter for the nozzle in question forms a line 31 on the carrier in the conveyance direction. Setting preferably is carried out on the basis of the size of the nozzle in question and/or the conveyance speed of the conveyor and/or the pressure in the reservoir with pancake batter 63 (see figure 6).

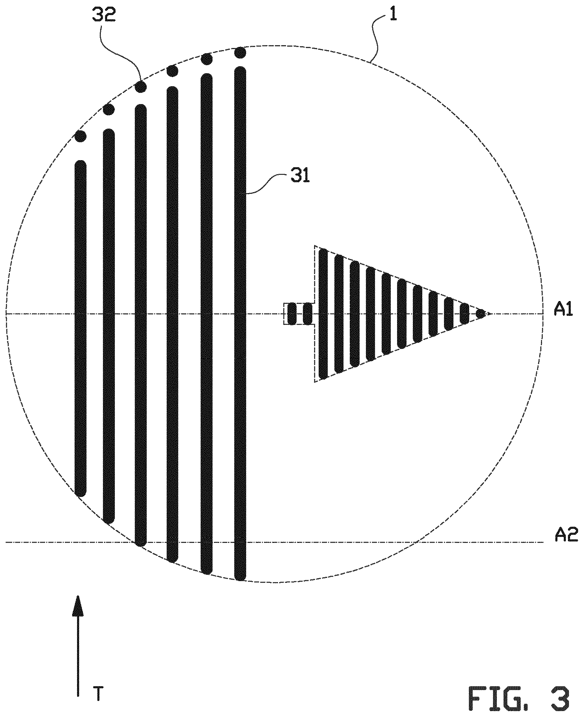

Figure 3 schematically shows how a number of lines 31 can together form a part of pancake 1 (left hand side in figure 3) or a pine tree (right hand side in figure 3). The number of lines 31 may in reality be larger and/or the distance between the lines may be smaller than shown in figure 3. The various lines 31 have been arranged by different nozzles.

The lines 31 may have been arranged by, at a predetermined point in time for the nozzle in question, opening the nozzle in question for a predetermined period of time for the nozzle in question. Because the carrier is moved in conveyance direction T relative to the nozzles, the lines 31 are formed on the carrier.

Figure 3 also shows how at a first point in time (indicated by the line A1) more nozzles can be open than is the case at a second point in time (indicated by line A2).

It is also possible that the preset quantity of pancake batter for the nozzle in question is set such that the preset quantity of pancake batter for the nozzle in question forms a dot or dot and line 32 onto the carrier in the conveyance direction.

In that way it becomes possible, in an industrial process for the production of pancakes, to apply a quantity of pancake batter on the layer of cooking oil applied on the carrier 11, such that the quantity of pancake batter near the edges is less than the rest of the pancake 1 to be formed, particularly due to suitable control of the discharge device 20, as a result of which the pancakes 1 made acquire the shape and texture of traditionally prepared pancakes.

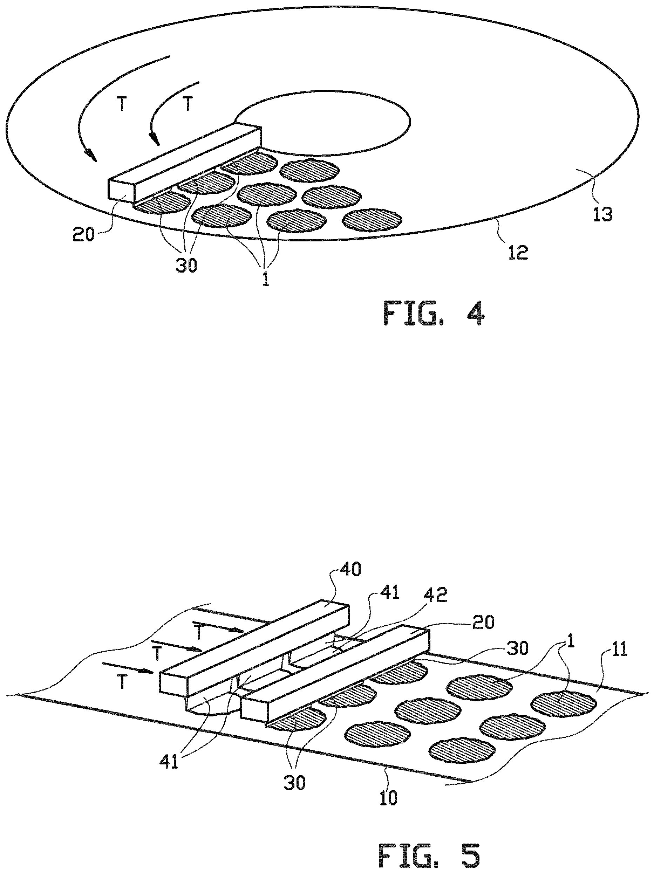

In one embodiment, as shown in figure 4, the conveyor 12 is designed like a disk having a round carrier 13. Such an embodiment is for instance used in fixed-disk ovens. Particularly for such a carrier 13 a discharge device 20 is highly suitable, as it can take radial speed differences of the conveyor into account. In that way the first discharge device 20 can be placed at a fixed position over the conveyor 12. The discharge device 20 is able to discharge pancake batter 30 onto the carrier 13, without moving along with the carrier 13, wherein a staggered placement of the pancakes 1 on the carrier 13 can be taken into account as well, staggered placement meaning that further away from the centre of the conveyor more pancakes 1 can be placed on a perimeter than more towards the centre.

In one embodiment, as shown in figure 5, over the carrier 11, a second discharge device 40 is placed upstream, at least considered in the conveyance direction T of conveyor 10. Said second discharge device 40 is adapted for discharging drops of cooking oil 41 onto the carrier 11. For discharging oil the second discharge device 40 preferably is provided with apertures that are smaller than the apertures for discharging pancake batter.

In that way it is possible to apply a layer of cooking oil 41 only on those positions on the carrier 11 where later on the first discharge device 20 will discharge pancake batter 30. The layers of cooking oil 41 therefore have surface shapes 42 comparable with those of the pancakes 1 to be made.

By individually operating the apertures 20 the point in time can be controlled at which said nozzles discharge the product in question, oil 41 or pancake batter 30, and it can also be controlled which nozzles 20 can discharge the product in question so that it is possible to apply the product in question in different shapes on the carrier on the conveyor.

In addition to the first and second discharge devices a third and/or fourth discharge device can be placed over the carrier for discharging a second quantity of pancake batter and/or for discharging a filling.

Dutch patent 2004393 furthermore describes how by means of several discharge devices (or food jet printers) visible figures have been arranged in the product using two different batters. Said figures can be made in various ways.

In a first method the first discharge device applies the decorative portions on the carrier. Subsequently the second discharge device applies a base layer over substantially the whole surface of the pancake. After flipping the, at least partially, baked pancake the decoration is visible at the top side.

In an alternative method the first discharge device first applies a base layer on the carrier, which base layer substantially forms the entire surface of the pancake to be formed. Subsequently the second discharge device applies decorative portions on the base layer.

In a second alternative method the first discharge device applies a first portion of the pancake and after that the second discharge device applies the remaining parts of the pancake. The latter method has the advantage that the decoration can be visible on both sides of the pancake.

In a third alternative method the first discharge device first applies a contour on the carrier, which contour is then at least partially filled in by the second discharge device.

Figure 6 shows a schematic cross-section of a part of an embodiment of a discharge device according to the invention. The discharge device 61 comprises several nozzles 21 for each time discharging a preset quantity of pancake batter for the nozzle in question. Figure 6 shows only one nozzle 21. The nozzles can be arranged in a wall 62 of a reservoir 63 for pancake batter.

The discharge device 61 preferably comprises a closing member for each nozzle for closing off the at least one aperture of the nozzle in question. In the embodiment of figure 6 the closing member comprises a cylinder 66 and a piston 64 moveable therein. The piston preferably is provided with an outer end 65, that fits at least partially in the aperture of the nozzle 21. In case the aperture is a round hole, the outer end may be conical. In figure 6 the nozzle 21 can therefore be opened and closed off by moving the piston 64.

The closing member can also comprise a movable valve and/or any other means suitable for temporarily closing off the aperture of the nozzle.

As at different points in time (also see figure 3) a different number of nozzles may be open, the pressure in the reservoir 63 may vary in time.

The closing members of the various nozzles may together form a closing device. The closing device preferably comprises the control device 70. In order to prevent damage to the closing device as a result of filling or cleaning the reservoir, it may be advantageous to separate the reservoir from the closing device, prior to filling or cleaning the reservoir.

The discharge device 61 preferably is provided with a pressure regulator 67 for keeping the pressure in the reservoir substantially constant during discharging pancake batter or for reducing pressure variations in the reservoir during discharging pancake batter.

In the embodiment of figure 6 the pressure regulator 67 is an expansion vessel, connected to the reservoir 63. The pressure regulator 67 may also comprise other means for influencing the pressure in the reservoir 63. For instance a piston and pressure sensor, wherein on the basis of the pressure measured by the pressure sensor, the piston exerts a force on the pancake batter in the reservoir 63.

Summarising one or more embodiments according to the invention can be described as follows: the invention relates to an assembly, discharge device and method for the production of pancakes. The assembly comprises a conveyor having a heatable carrier on which the pancakes to be made are conveyed; and, a first discharge device wherein the first discharge device is provided with several nozzles for each time discharging a preset quantity of pancake batter for the nozzle in question onto the carrier. The preset quantity of pancake batter for the nozzle in question and a conveyance speed of the conveyor have been set such that the preset quantity of pancake batter for the nozzle in question forms a line on the carrier in the conveyance direction. The several nozzles may be connected to a reservoir for the pancake batter. The discharge device may comprise a pressure regulator for keeping the pressure in the reservoir substantially constant during discharging pancake batter.

## Claims

1. Assembly for the production of pancakes, comprising:
- a conveyor having a heatable carrier on which the pancakes to be made are conveyed in a conveyance direction;
- a first discharge device placed over the conveyor, wherein the first discharge device is provided with several nozzles for each time discharging a preset quantity of pancake batter for the nozzle in question onto the carrier; and
- a control device for individually controlling substantially each nozzle of the discharge device for the discharge or not of a preset quantity of pancake batter for the nozzle in question,
wherein the control device is adapted for controlling the discharge device such that the preset quantity of pancake batter for the nozzle in question forms a line on the carrier in the conveyance direction and that several lines, each coming from a different nozzle, together form at least a part of the pancake to be made.

2. Assembly according to claim 1, wherein the several nozzles have been connected to a reservoir for the pancake batter.

3. Assembly according to claim 2, wherein the reservoir for the pancake batter is pressurised and wherein the several nozzles are adapted for discharging the preset quantity of pancake batter for the nozzle in question by temporarily opening the nozzle in question.

4. Assembly according to claim 2 or 3, wherein the several nozzles have been formed in a wall of the reservoir for the pancake batter.

5. Assembly according to any one of the claims 2 - 4, further comprising a pressure regulator for keeping the pressure in the reservoir substantially constant during discharging the pancake batter.

6. Assembly according to claim 5, wherein the pressure regulator comprises an expansion vessel connected to the reservoir.

7. Method for the production of pancakes, in which method use is made of a conveyor having a heatable carrier on which the pancakes to be made are conveyed and a first discharge device placed over the conveyor, wherein the first discharge device is provided with several nozzles for each time discharging a preset quantity of pancake batter for the nozzle in question onto the carrier, wherein the method comprises the steps of:
- applying a layer of cooking oil or a comparable shortening on the carrier, and
- discharging a quantity of pancake batter onto the layer of cooking oil applied on the carrier by the first discharge device,
wherein the carrier is moved relative to the discharge device in a conveyance direction by the conveyor,
each of the several nozzles each time discharges the preset quantity of pancake batter for the nozzle in question,
wherein the preset quantity of pancake batter for the nozzle in question is set such that the preset quantity of pancake batter for the nozzle in question forms a line on the carrier in the conveyance direction, and
wherein several lines, each coming from a different nozzle, together form at least a part of a pancake to be made.

8. Method according to claim 7, wherein substantially each nozzle of the discharge device is individually controlled for the discharge or not of a preset quantity of pancake batter for the nozzle in question.

9. Method according to claim 7 or 8, wherein the several nozzles have been connected to a reservoir for the pancake batter.

10. Method according to claim 9, wherein the preset quantity of pancake batter for the nozzle in question is discharged by pressurising the reservoir with pancake batter and temporarily opening the nozzle in question.

11. Method according to any one of the claims 9 - 10, wherein the several nozzles have been formed in a wall of the reservoir for the pancake batter.

12. Method according to any one of the claims 9 - 11, further comprising the step of keeping the pressure in the reservoir substantially constant during discharging pancake batter.

13. Method according to claim 12, wherein an expansion vessel is used to keep the pressure in the reservoir substantially constant during discharging the pancake batter.

## Patentansprüche

1. Anordnung zur Herstellung von Pfannkuchen umfassend:
- einen Förderer, der einen beheizbaren Träger aufweist, auf dem die herzustellenden Pfannkuchen in einer Förderrichtung befördert werden;
- eine erste Auslassvorrichtung, die über dem Förderer angeordnet ist, wobei die erste Auslassvorrichtung mit mehreren Düsen zum jeweils Auslassen einer für die betreffende Düse voreingestellten Menge an Pfannkuchenteig auf den Träger versehen ist; und
- eine Regeleinrichtung, um im Wesentlichen jede Düse der Auslassvorrichtung individuell dahingehend zu regeln, eine für die betreffende Düse voreingestellte Menge an Pfannkuchenteig auszulassen oder nicht,
wobei die Regeleinrichtung ausgebildet ist, die Auslassvorrichtung derart zu regeln, dass die für die betreffende Düse voreingestellte Menge an Pfannkuchenteig eine Linie in Förderrichtung auf dem Träger bildet und dass mehrere Linien, von denen jede aus einer anderen Düse stammt, zusammen wenigstens einen Teil des herzustellenden Pfannkuchens bilden.

2. Anordnung gemäß Anspruch 1, wobei die mehreren Düsen mit einem Reservoir für den Pfannkuchenteig verbunden sind.

3. Anordnung gemäß Anspruch 2, wobei das Reservoir für den Pfannkuchenteig unter Druck steht und wobei die mehreren Düsen ausgebildet sind, die für die betreffende Düse voreingestellte Menge an Pfannkuchenteig auszulassen, indem die betreffende Düse zeitweise geöffnet wird.

4. Anordnung gemäß Anspruch 2 oder 3, wobei die mehreren Düsen in einer Wandung des Reservoirs für den Pfannkuchenteig ausgebildet sind.

5. Anordnung gemäß einem der Ansprüche 2 bis 4 umfassend des Weiteren einen Druckregler, um den Druck in dem Reservoir während des Auslassens des Pfannkuchenteigs im Wesentlichen konstant zu halten.

6. Anordnung gemäß Anspruch 5, wobei der Druckregler ein Ausdehnungsgefäß, das mit dem Reservoir verbunden ist, umfasst.

7. Verfahren zur Herstellung von Pfannkuchen, in dem ein Förderer, der einen beheizbaren Träger aufweist, auf dem die herzustellenden Pfannkuchen befördert werden, und eine erste Auslassvorrichtung, die über dem Förderer angeordnet ist, verwendet werden, wobei die erste Auslassvorrichtung mit mehreren Düsen zum jeweils Auslassen einer für die betreffende Düse voreingestellten Menge an Pfannkuchenteig auf den Träger versehen ist, wobei das Verfahren die folgenden Schritte umfasst:
- Aufbringen einer Schicht von Speiseöl oder eines vergleichbaren Backfetts auf den Träger, und
- Auslassen einer Menge an Pfannkuchenteig auf die Schicht des Speiseöls, die auf den Träger aufgebracht wurde, durch die erste Auslassvorrichtung,
wobei der Träger durch den Förderer relativ zu der Auslassvorrichtung in einer Förderrichtung bewegt wird,
jede der mehreren Düsen jeweils die für die betreffende Düse voreingestellte Menge an Pfannkuchenteig auslässt,
wobei die für die betreffende Düse voreingestellte Menge an Pfannkuchenteig derart eingestellt ist, dass die für die betreffende Düse voreingestellte Menge an Pfannkuchenteig eine Linie auf dem Träger in der Förderrichtung bildet, und
wobei mehrere Linien, von denen jede aus einer anderen Düse stammt, zusammen wenigstens einen Teil des herzustellenden Pfannkuchens bilden.

8. Verfahren gemäß Anspruch 7, wobei im Wesentlichen jede Düse der Auslassvorrichtung individuell dahingehend geregelt wird, für die betreffende Düse eine voreingestellte Menge an Pfannkuchenteig auszulassen oder nicht.

9. Verfahren gemäß Anspruch 7 oder 8, wobei die mehreren Düsen mit einem Reservoir für den Pfannkuchenteig verbunden sind.

10. Verfahren gemäß Anspruch 9, wobei die für die betreffende Düse voreingestellte Menge an Pfannkuchenteig durch Unterdrucksetzen des Reservoirs mit dem Pfannkuchenteig und zeitweiliges Öffnen der betreffenden Düse ausgelassen wird.

11. Verfahren gemäß einem der Ansprüche 9 bis 10, wobei die mehreren Düsen in einer Wandung des Reservoirs für den Pfannkuchenteig ausgebildet sind.

12. Verfahren gemäß einem der Ansprüche 9 bis 11 umfassend des Weiteren den Schritt des im Wesentlichen Konstanthaltens des Drucks in dem Reservoir während des Auslassens von Pfannkuchenteig.

13. Verfahren gemäß Anspruch 12, wobei ein Ausdehnungsgefäß verwendet wird, um den Druck in dem Reservoir während des Auslassens des Pfannkuchenteigs im Wesentlichen konstant zu halten.

## Revendications

1. Ensemble pour la production de crêpes, comprenant :
- un convoyeur comportant un support pouvant être chauffé sur lequel les crêpes à réaliser sont transportées dans une direction de transport ;
- un premier dispositif de déversement placé sur le convoyeur, dans lequel le premier dispositif de déversement est pourvu d'une pluralité de buses pour déverser à chaque fois une quantité prédéterminée de pâte à crêpes pour la buse en question sur le support ; et
- un dispositif de commande pour commander individuellement sensiblement chaque buse du dispositif de déversement pour le déversement ou non d'une quantité prédéterminée de pâte à crêpes pour la buse en question,
dans lequel le dispositif de commande est conçu pour commander le dispositif de déversement de sorte que la quantité prédéterminée de pâte à crêpes pour la buse en question forme une ligne sur le support dans la direction de transport et que plusieurs lignes, provenant chacune d'une buse différente, forment ensemble au moins une partie de la crêpe à réaliser.

2. Ensemble selon la revendication 1, dans lequel la pluralité de buses ont été reliées à un réservoir pour la pâte à crêpes.

3. Ensemble selon la revendication 2, dans lequel le réservoir pour la pâte à crêpes est mis sous pression et dans lequel la pluralité de buses sont conçues pour déverser la quantité prédéterminée de pâte à crêpes pour la buse en question en ouvrant temporairement la buse en question.

4. Ensemble selon la revendication 2 ou 3, dans lequel la pluralité de buses ont été formées dans une paroi du réservoir pour la pâte à crêpes.

5. Ensemble selon l'une quelconque des revendications 2 à 4, comprenant en outre un régulateur de pression pour maintenir la pression dans le réservoir sensiblement constante pendant le déversement de la pâte à crêpes.

6. Ensemble selon la revendication 5, dans lequel le régulateur de pression comprend une cuve d'expansion reliée au réservoir.

7. Procédé pour la production de crêpes, dans lequel procédé un convoyeur comportant un support pouvant être chauffé sur lequel les crêpes à réaliser sont transportées et un premier dispositif de déversement placé sur le convoyeur sont utilisés, dans lequel le premier dispositif de déversement est pourvu d'une pluralité de buses pour déverser à chaque fois une quantité prédéterminée de pâte à crêpes pour la buse en question sur le support, dans lequel le procédé comprend les étapes :
- d'application d'une couche d'huile de cuisson ou d'une matière grasse comparable sur le support, et
- de déversement d'une quantité de pâte à crêpes sur la couche d'huile de cuisson appliquée sur le support par le premier dispositif de déversement,
dans lequel le support est déplacé par rapport au dispositif de déversement dans une direction de transport par le convoyeur,
chacune de la pluralité de buses déverse à chaque fois la quantité prédéterminée de pâte à crêpes pour la buse en question,
dans lequel la quantité prédéterminée de pâte à crêpes pour la buse en question est fixée de sorte que la quantité prédéterminée de pâte à crêpes pour la buse en question forme une ligne sur le support dans la direction de transport, et
dans lequel plusieurs lignes, provenant chacune d'une buse différente, forment ensemble au moins une partie d'une crêpe à réaliser.

8. Procédé selon la revendication 7, dans lequel sensiblement chaque buse du dispositif de déversement est commandée individuellement pour le déversement ou non d'une quantité prédéterminée de pâte à crêpes pour la buse en question.

9. Procédé selon la revendication 7 ou 8, dans lequel la pluralité de buses ont été reliées à un réservoir pour la pâte à crêpes.

10. Procédé selon la revendication 9, dans lequel la quantité prédéterminée de pâte à crêpes pour la buse en question est déversée en mettant sous pression le réservoir avec la pâte à crêpes et en ouvrant temporairement la buse en question.

11. Procédé selon l'une quelconque des revendications 9 et 10, dans lequel la pluralité de buses ont été formées dans une paroi du réservoir pour la pâte à crêpes.

12. Procédé selon l'une quelconque des revendications 9 à 11, comprenant en outre l'étape de maintien de la pression dans le réservoir sensiblement constante pendant le déversement de la pâte à crêpes.

13. Procédé selon la revendication 12, dans lequel une cuve d'expansion est utilisée pour maintenir la pression dans le réservoir sensiblement constante pendant le déversement de la pâte à crêpes.
